# EUROPEAN PATENT APPLICATION

(11) **EP 3 550 826 A1**
(43) Date of publication of application: **09.10.2019**
(21) Application number: 18867301.6
(22) Date of filing: 05.09.2018
(51) Int. Cl.: H04N 7/14, G02F 1/13

(54) **DISPLAY/IMAGING DEVICE**

(30) Priority: 26.02.2018 JP 2018031634
(71) Applicant: NTT DOCOMO, INC., Chiyoda-ku Tokyo 100-6150 (JP)
(72) Inventor: KIMURA, Shinji, Tokyo 100-6150 (JP); OSEKI, Eriko, Tokyo 100-6150 (JP); ABURAKAWA, Yuji, Tokyo 100-6150 (JP)
(74) Representative: Viering, Jentschura & Partner mbB Patent- und Rechtsanwälte
(86) International application number: PCT/JP2018/032908
(87) International publication number: WO 2019/163169

(57) **Abstract**

A display imaging device (7) includes: a display (1) that has a viewing angle on a front side and is transparent and a self-emission type; a camera (2) that images the front side through the display (1) from a rear side of the display (1); and a masking member (3) that includes a transparent first part (31) and a non-transparent second part (32), and is disposed to cover a rear face (1b) of the display (1). The first part (31) of the masking member (3) overlaps the camera (2) when the display (1) is seen from the front side.

## Description

### Technical Field

The present invention relates to a display imaging device.

### Background Art

Techniques for realizing a video call in a state in which visual lines coincide with each other have been proposed. Patent Document 1 discloses a technique of displaying a face or the like of a phone call partner on a display and imaging a front side of a user using an imaging device by using reflection of a hologram disposed in front of the display. According to this technique, since the front side of a user can be imaged in a state in which a user and a phone call partner face each other, there is a high possibility of realizing a video call in a state in which visual lines coincide with each other.

### Citation List

### Patent Literature

[Patent Document 1] Japanese Unexamined Patent Publication No. H5-328336

### Summary of Invention

### Technical Problem

In a case in which a hologram is used as in Patent Document 1, for example, there is a problem in the aspect of video quality such as a decrease in color reproducibility. An object of the present invention is to provide a display imaging device capable of realizing a state in which visual lines coincide with each other and improving video quality.

### Solution to Problem

According to one aspect of the present invention, there is provided a display imaging device including: a display that has a viewing angle on a front side and is transparent and a self-emission type; a camera that images the front side through the display from a rear side of the display; and a masking member that includes a transparent first part and a non-transparent second part, and is disposed to cover a rear face of the display, wherein the first part of the masking member overlaps the camera when the display is seen from the front side.

According to the display imaging device, a video can be presented to a user in front of the display. In addition, the transparent first part of the masking member disposed to cover the rear face of the display overlaps the camera when the display is seen from the front side. Accordingly, a user in front of the display can be imaged by the camera from the rear side of the display. Since a user can be imaged from the front side, for example, in a case in which the display imaging device is used for a video call or the like, a state in which visual lines coincide with each other can be realized. In addition, instead of using a hologram as in Patent Document 1, a self-emission type display is used, and accordingly, video quality can be improved.

In addition, according to the display device described above, the non-transparent second part of the masking member covers a part other than a part in which the camera is located in the rear face of the display. In a case in which this non-transparent second part is not present, a background is seen when the display is seen from the front side. Particularly, when the light emission amount of the display is small, the camera is conspicuously seen in the background when the display is seen from the front side. Since the background is not visible due to the presence of the non-transparent second part, the camera can be configured not to be visually conspicuous (concealed). The visibility (including contrast and the like) of the display can be improved in accordance with the background not being visible.

### Advantageous Effects of Invention

According to the present invention, a display imaging device capable of realizing a state in which visual lines coincide with each other and improving video quality is provided.

### Brief Description of Drawings

Fig. 1 is a schematic configuration diagram of a display imaging device according to a first embodiment.
Fig. 2 is an exploded perspective view of the display imaging device illustrated in Fig. 1.
Fig. 3 is a schematic configuration diagram of a video call system.
Fig. 4 is an exploded perspective view of a display imaging device according to a second embodiment.
Fig. 5 is a flowchart illustrating an example of dynamic control of a liquid crystal mask.
Fig. 6 is a diagram illustrating an example of dynamic control of a liquid crystal mask.
Fig. 7 is a diagram illustrating an example of the hardware configuration of a control device and the like.

### Description of Embodiments

Hereinafter, embodiments of the present invention will be described with reference to the drawings. In the drawings, the same reference signs will be assigned to the same components, and duplicate description will be omitted.

### [First embodiment]

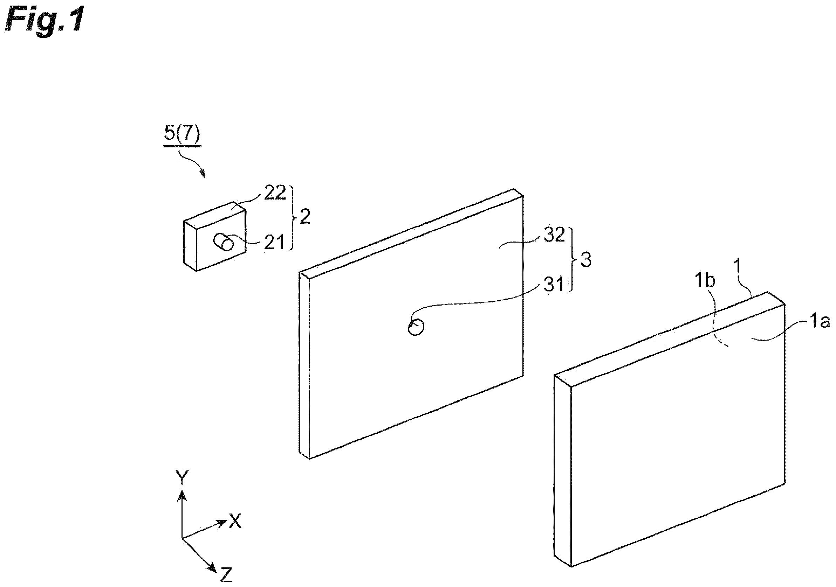

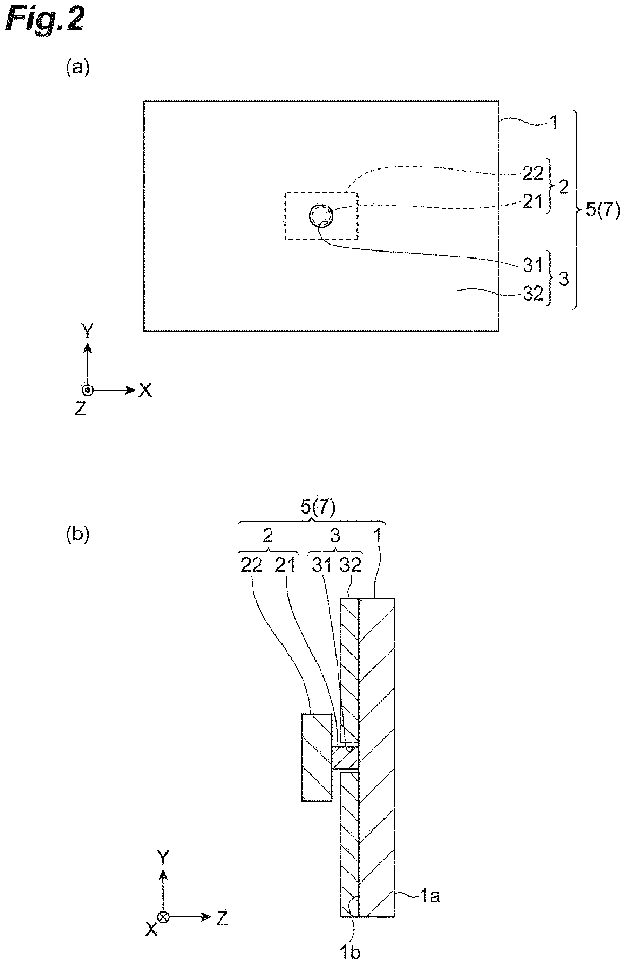

An example of the configuration of a display imaging unit 5 included in a display imaging device 7 according to a first embodiment will be described with reference to Figs. 1 and 2. The display imaging unit 5 includes a display 1, a camera 2, and a masking member 3.

Here, Fig. 1 is an exploded perspective view of the display imaging unit 5. (a) of Fig. 2 is a front view of the display imaging unit 5, and (b) of Fig. 2 is a cross-sectional view of a part of in the display imaging unit 5 in which a first part 31 of the masking member 3 to be described later is present. In (a) of Fig. 2, the display 1 and the masking member 3 are denoted by solid lines, and the camera 2 is denoted by dashed lines. An edge of the display 1 and an edge of the masking member 3 overlap each other. In addition, in the drawing, an XYZ orthogonal coordinate system is illustrated. In the drawing, an X-axis direction is set in a horizontal direction (widthwise direction) of the display 1. A Y-axis direction is set in a vertical direction (height direction) of the display 1. A Z-axis direction is set in a forward/backward direction of the display 1. The exploded perspective view of Fig. 1 is a view in which the display imaging unit 5 is exploded in the Z-axis direction. (a) of Fig. 2 is a view in which the display imaging unit 5 is seen in a Z-axis positive direction. (b) of Fig. 2 is a cross-sectional view in which the display imaging unit 5 is seen in an X-axis negative direction.

The display 1 is a self-emission type display. An example of the self-emission type display is a display in which each pixel is configured to include an organic light emitting diode (OLED). In addition, the display 1 is a transparent display. An example of the transparent display is a display acquired by disposing each pixel on a transparent base (substrate) of plastic or the like. The display 1 may have a configuration acquired by combining a configuration of such a self-emission type display and a configuration of the transparent display.

The display 1 extends along an XY plane. The display 1 includes a front face 1a and a rear face 1b. The front face 1a is a display surface of the display 1. The display 1 has a viewing angle on the front side (a Z-axis positive direction). The viewing angle may be smaller than 180 degrees in each of a horizontal direction (the X-axis direction) and a vertical direction (the Y-axis direction). Light generated by the display 1 (for example, video light) progresses from the front face 1a to the front side (the Z-axis positive direction) within the range of the viewing angle. A video displayed on the front face 1 a of the display 1 is brightest when the display 1 is seen in a front face direction (the front side (the Z-axis positive direction)). In addition, a "video" includes an "image," and thus a "video" and an "image" may be interchanged with each other as appropriate.

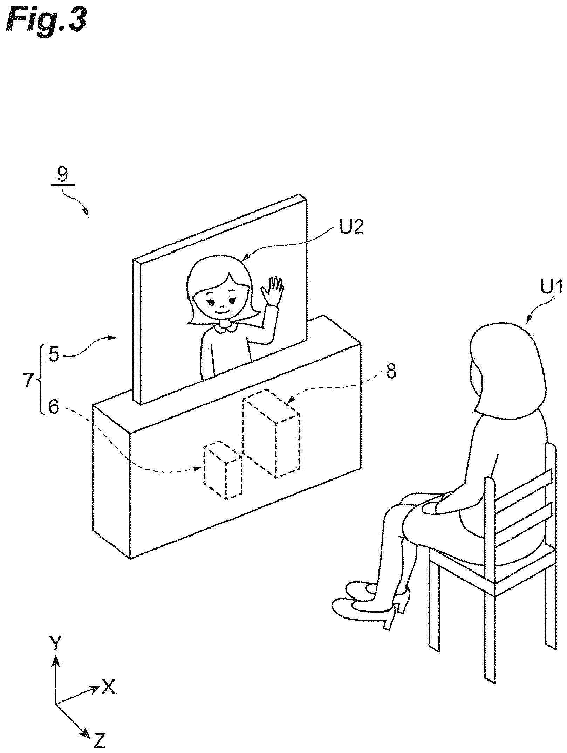

The camera 2 is disposed in the rear side of the display 1 (the Z-axis negative direction). As described above, since the display 1 is transparent, the camera 2 can image the front side of the display 1 (the Z-axis positive direction) through the display 1 from the rear side of the display 1. An example of an imaging target is a user using the display imaging device 7 (a user U1 illustrated in Fig. 3 to be described later). In addition, light generated by the display 1 as described above progresses from the front face 1a to the front side (in the Z-axis positive direction) within the range of the viewing angle, and thus a video of the display 1 is not captured by the camera 2 disposed in the rear side of the display 1 (the Z-axis negative direction). The camera 2 includes a light receiving unit 21 and a main body 22.

The light receiving unit 21 is a part that takes in light in the camera 2. The light receiving unit 21 is configured such that light from an imaging target object positioned within the range of an angle of view of the camera 2 is incident thereon. In one embodiment, the light receiving unit 21 may be a lens part of the camera 2. In the Z-axis direction, the light receiving unit 21 may be positioned further forward (in the Z-axis positive direction) than the main body 22. In this example, the light receiving unit 21 has a cylinder shape extending from the main body 22 to the front side (in the Z-axis positive direction). When seen in the Z-axis direction, the light receiving unit 21 is smaller than the main body 22. The light receiving unit 21 exhibits a black color or a color close to black (hereinafter, simply referred to as "black") because it is a part that takes in light as described above and does not reflect light.

The main body 22 has functions other than the function of the light receiving unit 21. The main body 22 may include a photoelectric conversion device, an image processing circuit, and the like. Some devices may be installed not in the main body 22 but in the light receiving unit 21. Similar to the light receiving unit 21, the main body 22 may exhibit a black color.

The masking member 3 is disposed to cover the rear face 1b of the display 1. The masking member 3 has a characteristic in that it does not easily reflect light (particularly, it easily absorbs light). For example, various known non-reflectivity members (a cloth, a board, and the like) may be used as the masking member 3. A non-reflectivity member used in the masking member 3 may exhibit a black color.

The area of the masking member 3 is approximately the same as that of the front face 1a and the rear face 1b of the display 1. The masking member 3 may be disposed on the rear face 1b of the display 1 (or close to the rear face 1b). While a method of arranging the masking member 3 is not particularly limited, the masking member 3 may be supported by a support member or the like not illustrated in the drawing, or the masking member 3 may be attached to the rear face 1b of the display 1 using an adhesive or the like. A thickness (a length in the Z-axis direction) of the masking member 3 may be smaller than that of the display 1.

In this embodiment, the masking member 3 includes a first part 31 and a second part 32. The second part 32 may be a part other than the first part 31 in the masking member 3.

The first part 31 is a transparent part in the masking member 3. Here, "being transparent" represents a characteristic of causing desired light to pass through it. The desired light includes visible light. As described above, in a case in which the masking member 3 is configured by a non-reflectivity member, the first part 31 may be acquired by preparing a non-reflectivity member having the same size as the front face 1a of the display 1 and forming an opening in a part of the non-reflectivity member. In such a case, the first part 31 is an opening disposed in the masking member 3. The formation of the opening may be performed by hollowing out a part of a non-reflectivity member or the like.

In a case in which the first part 31 is an opening, the light receiving unit 21 of the camera 2 may be disposed inside the opening. In such a case, a tip end of the light receiving unit 21 of the camera 2 may be disposed near the rear face 1b of the display 1. Since the light receiving unit 21 is close to the front side (in the Z-axis positive direction) in accordance with this, a user (a user U1 illustrated in Fig. 3) can be imaged from as close as possible.

The first part 31 of the masking member 3 overlaps the camera 2 when the display 1 is seen from the front side (in the Z-axis positive direction) (from the front face side). The first part 31 is positioned in a part in which the camera 2 is disposed in the rear face 1b of the display 1. For this reason, the second part 32 of the masking member 3 covers a part other than the part in which the camera 2 is positioned in the rear face 1b of the display 1. The second part 32 is a non-transparent part of the masking member 3. Here, "being non-transparent" represents a characteristic of not allowing desired light (for example, visible light) to pass through it (particularly, a characteristic of absorbing desired light).

The first part 31 of the masking member 3 may overlap the light receiving unit 21 of the camera 2 when seen in the Z-axis direction. For example, a boundary between the first part 31 and the second part 32 may include an outer edge of the light receiving unit 21 on the inner side when seen in the Z-axis direction. Here, "included on the inner side" also includes a case in which the boundary between the first part 31 and the second part 32 and an outer edge of the light receiving unit 21 overlap each other. The boundary between the first part 31 and the second part 32 may not include the main body 22 of the camera 2 on the inner side. Accordingly, the second part 32 of the masking member 3 may cover a part other than the light receiving unit 21 of the camera 2 in the rear face 1b of the display 1.

The display imaging device 7 including the display imaging unit 5 described above, for example, may be used in a video call system 9 to be described next.

Fig. 3 is a diagram illustrating a schematic configuration of a video call system 9. The video call system 9 includes the display imaging device 7 and a communication device 8. In this example, a user U1 using the video call system 9 performs a video call with a user U2 who is a conversation partner. The user U1 sees the display 1 (Fig. 2 and the like) from the front face (in the Z axis positive direction). Accordingly, the camera 2 (Fig. 2 and the like) can image the user U1 from the front face (in the Z-axis negative direction) through the display 1 (Fig. 2 and the like). The communication device 8 transmits/receives video data, audio data, and the like to/from a video call system, which is not illustrated in the drawing, used by the user U2. The video data includes video data of the user U1 and video data of the user U2. The audio data includes audio data of the user U1 and audio data of the user U2.

The display imaging device 7 includes a control unit 6 in addition to the display imaging unit 5 that has been described with reference to Figs. 1 and 2. The control unit 6, for example, may be a control device configured using a computer. In addition to these, components, which are not illustrated in the drawing, required for the video call system 9 such as a speaker, a microphone, and the like are included in the display imaging device 7.

The control unit 6 is a part that executes various kinds of control required for operating the display imaging device 7 in the video call system 9. The control unit 6 executes a transmission/reception process for receiving display data (for example, the video data of the user U2 described above) according to the display 1 using the communication device 8 and transmitting imaging data according the camera 2 (for example, the video data of the user U1 described above) using the communication device 8. The control unit 6 can also execute a time division process to be described next.

In the time division process, the control unit 6 controls the display 1 and the camera 2 such that a timing at which the display 1 emits light (displays a video) and a timing at which the camera 2 performs imaging in the display imaging unit 5 do not overlap each other. When the display 1 displays a video, the camera 2 does not perform imaging. When the display 1 does not display a video, the camera 2 performs imaging. For example, in a case in which the display 1 is driven at 120 frames/second (in other words, 120 Hz), display of a video using the display 1 and imaging using the camera 2 may be alternately executed for every one frame. A smooth (causing flickering of the display 1 not to be recognized) video at 60 frames/second is presented to the user U1. For the time division process, a synchronization control box not illustrated in the drawing may be included in the display imaging device 7. The synchronization control box transmits a synchronization signal to both the display 1 and the camera 2. By using the synchronization signal, control of timings in units of frames as described above can be performed more reliably. The function of the synchronization control box may be included in the control unit 6.

The display imaging device 7 described above includes the display 1, the camera 2, and the masking member 3. The display 1 is a transparent self-emission type display having a viewing angle on the front side (in the Z-axis positive direction). The camera 2 images the front side (in the Z-axis positive direction) from the rear side of the display 1 through the display 1. The masking member 3 includes the transparent first part 31 and the non-transparent second part 32, and is disposed such that it covers the rear face 1b of the display 1. The first part 31 of the masking member 3 overlaps the camera 2 when the display 1 is seen from the front side (in the Z-axis positive direction).

According to the display imaging device 7, a video can be presented to the user U1 on the front side of the display 1 (in the Z axis positive direction). In addition, the transparent first part 31 of the masking member 3 that is disposed to cover the rear face 1b of the display 1 overlaps the camera 2 when the display 1 is seen from the front side (the Z-axis positive direction). Accordingly, the user U1 on the front side of the display 1 (in the Z-axis positive direction) can be imaged by the camera 2 from the rear side of the display 1 (in the Z axis negative direction). Since the user U1 can be imaged from the front side, for example, in a case in which the display imaging device 7 is used in the video call system 9, a state in which the visual lines coincide with each other between the user U1 and the user U2 who is a call partner can be realized. In addition, instead of using a hologram as in Patent Document 1, the self-emission type display is used, and accordingly, video quality including color reproducibility and the like can be improved. The reason for this is that, although there is a problem also in the aspect of the quality of a video (both a display video of a display and imaged video of a camera) such as color reproducibility, diffraction blurring of a video, and the like in a case in which a hologram is used, such a problem does not occur in the display imaging device 7 including the self-emission type display 1 and the camera 2 imaging the front side through the transparent display 1.

In addition, according to the display imaging device 7, the non-transparent second part 32 of the masking member 3 covers a part other than the part in which the camera 2 is positioned in the rear face 1b of the display 1. In a case in which this non-transparent second part 32 is not present, a background (an object behind the display 1) is seen when the display 1 is seen from the front side (in the Z-axis positive direction). Particularly, when the amount of light emission of the display 1 is small (when a dark video is displayed or the like), when the display 1 is seen from the front side (in the Z axis positive direction), the camera 2 is seen to stand out conspicuously in the background. Since the background is not seen in accordance with the presence of the non-transparent second part 32, the camera 2 can be configured not to be visually conspicuous (can be concealed). In this way, the user U1 is caused not to be conscious of the presence of the camera 2, and accordingly, communication in the video call system 9 can be performed smoothly. In addition, the visibility (the contrast and the like) of the display 1 can be further improved in accordance with invisibility of the background.

In addition, instead of a hologram as in Patent Document 1, a system in which a half mirror is disposed in front of a display may also be considered. However, since the half mirror needs to be disposed to be inclined at 45 degrees in that case, there is a problem in that depth of the system is required. In the display imaging device 7, the display 1 does not need to be disposed to be inclined, and accordingly, a space required for the depth of the system can be reduced. Accordingly, a compact system can be realized.

The first part 31 of the masking member 3 may be an opening. In such a case, the first part 31 can be easily acquired by hollowing out a part of a material (for example, a non-reflectivity member) composing the masking member 3 or the like.

The display imaging device 7 may further include the control unit 6. In such a case, the control unit 6 may control the display 1 and the camera 2 such that light emission using the display 1 and imaging using the camera 2 are performed at different timings (a time division process may be executed). As described above, light (for example, video light) generated by the display 1 progresses from the front face 1a to the front side (in the Z axis positive direction) in the range of a viewing angle. However, there are also cases in which some light leaks to the rear face 1b side and progresses to the rear side (in the Z axis negative direction). In such cases, there is a possibility of a video of the display 1 being imaged by the camera 2. For example, in a case in which a protective glass (surface glass) not illustrated in the drawing is disposed on the front face 1a side of the display 1 or the like, imaging of such a video may easily occur. As described above, by configuring the device such that light emission using the display 1 and imaging using the camera 2 are performed at different timings, a video of the display 1 can be reliably prevented from being imaged by the camera 2.

The camera 2 includes the light receiving unit 21 on which light from an imaging target is incident, and the first part 31 of the masking member 3 may overlap the light receiving unit 21 of the camera 2 when the display 1 is seen from the front side (in the Z axis positive direction). The first part 31 may overlap only the light receiving unit 21. In such a case, when the display 1 is seen from the front side (in the Z axis positive direction), it is difficult for a part (the main body 22) of the camera 2 other than the light receiving unit 21 to be seen, and accordingly, the effect of concealment of the camera 2 can be further improved. Since a part of the rear face 1b of the display 1 other than the light receiving unit 21 is covered with the second part 32 of the masking member 3, the visibility of the display 1 can be further improved.

The second part 32 of the masking member 3 may exhibit a black color. In such a case, the second part 32 can be enabled to appropriately function as a non-transparent part. In a case in which the camera 2 exhibits a black color, the camera can be appropriately concealed, and the performance of black display of the display 1 can be improved.

### [Second embodiment]

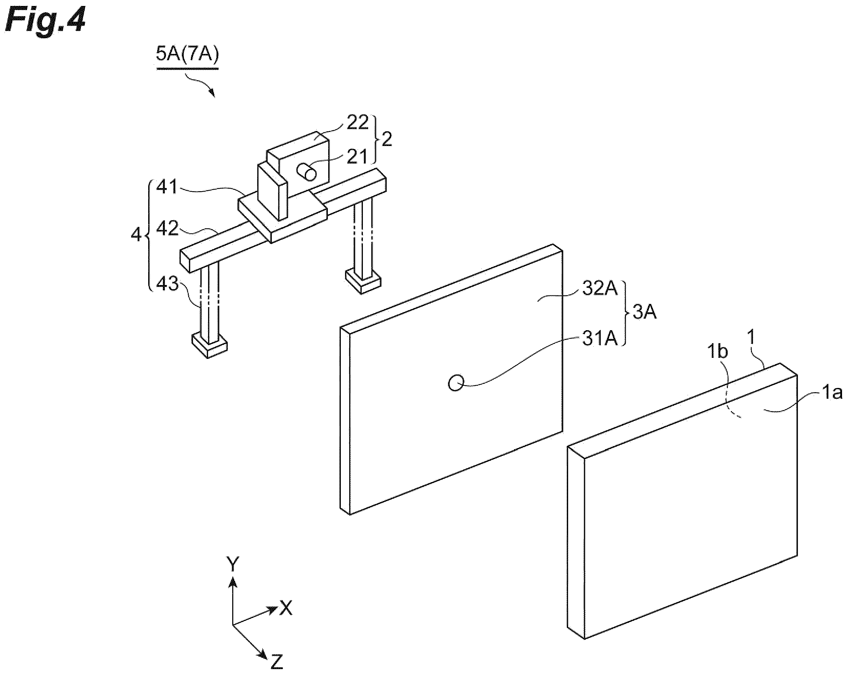

Fig. 4 is an exploded perspective view of a display imaging device according to a second embodiment. The display imaging device 7A illustrated in Fig. 4 includes a display imaging unit 5A instead of the display imaging unit 5 (Fig. 2), which is different from the display imaging device 7 (Fig. 1 and the like). The display imaging unit 5A includes a masking member 3A instead of the masking member 3 and further includes a stage 4, which is different from the display imaging unit 5 (Fig. 2). The stage 4 is one specific example of a movement device that moves the camera 2.

The masking member 3A is a liquid crystal mask configured using liquid crystals. Examples of the masking member 3A are a crystal plate, a liquid crystal sheet, and the like. The masking member 3A is configured to cause liquid crystals to be switchable between a state in which light is transmitted (on) and a state in which light is not transmitted (off) for each part. On/off of the liquid crystals is controlled by the control unit 6 (Fig. 3). By causing liquid crystals in a predetermined part of the masking member 3A to be in the on state, a first part 31A is acquired. The first part 31A is a transparent part of the masking member 3A. When seen from the front side (in the Z axis positive direction), a shape of the first part 31A may be the same as that of the camera 2 or may be the same as that of the light receiving unit 21 of the camera 2. By causing liquid crystals of a part of the masking member 3A other than a predetermined part to be off, a second part 32A is acquired. The second part 32A, similar to the second part 32 (Fig. 2), is a non-transparent part of the masking member 3A. A tip end of the light receiving unit 21 of the camera 2 may be disposed near the first part 31. According to the masking member 3A, as will be described next, the position of the first part 31 can be dynamically controlled in accordance with a video displayed on the display 1 (in accordance with movement of the camera 2).

In the example illustrated in Fig. 4, the position of the camera 2 mounted on the stage 4 moves. The stage 4 includes a support part 41, a horizontal rail 42, and leg parts 43. The support part 41 is a part that is brought into contact with a camera 2 and supports the camera. The support part 41 moves on the horizontal rail 42. The support part 41 may support the camera 2 such that it can adjust an angle of the camera 2. The horizontal rail 42 extends in a horizontal direction (the X axis direction) of the display 1. The horizontal rail 42 is disposed on the leg parts 43. The leg parts 43 can be stretched or contracted in a vertical direction (the Y-axis direction). Accordingly, the camera 2 can move in a planar direction (within an XY plane) of the display 1 via the support part 41.

Similar to the masking member 3A, the stage 4 is controlled by the control unit 6 (Fig. 3). The control unit 6 controls the position of the camera 2 according to the stage 4 and the position of the first part 31 of the masking member 3A in association with each other. In this way, control of moving the first part 31A in the masking member 3A in accordance with movement of the camera 2 (dynamic control) can be performed. In addition, the control unit 6 moves the camera 2 in association with a video displayed on the display 1. For example, the control unit 6 detects a position of a person in a video displayed on the display 1 and moves the camera 2 such that it follows the position. Various known techniques can be used for detection of a position of a person in a displayed video. More specifically, the control unit 6 may detect a position of a face, positions of eyes, or the like of a person.

In accordance with the dynamic control as described above, for example, when the display 1 is seen from the front side (the Z axis positive direction), the camera 2 and the first part 31 of the masking member 3A can be moved to a position of a face, eyes, or the like of a person displayed on the display 1 (for example, the face, the eyes, or the like of the user U2 in Fig. 3).

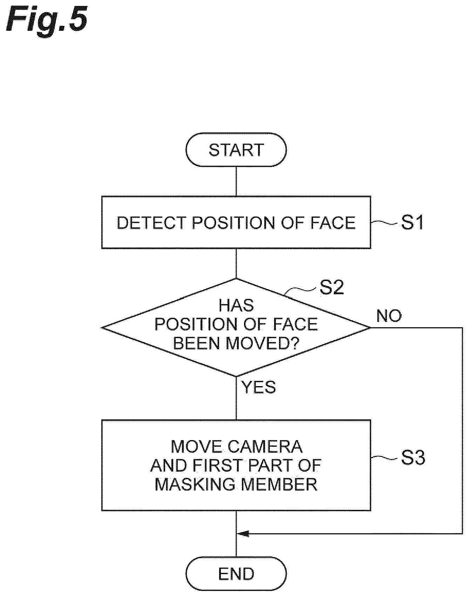

Fig. 5 is a flowchart illustrating an example of dynamic control of the first part 31A using the control unit 6 described above. The process of this flowchart, for example, is repeatedly executed while the display imaging device 7A is used for the video call system 9. Here, it is assumed that the camera 2 and the first part 31A of the masking member 3A are located at the position of a face of a person displayed on the display 1 when the process of the flowchart starts. The camera 2 moves in accordance with the position of the face of the person.

In Step S1, the position of the face is detected. More specifically, the control unit 6 detects the position of the face of the person appearing in a video displayed on the display 1 (functioning as a detection unit). The detection may be performed on the basis of a video actually displayed on the display 1 or may be performed on the basis of video data (for example, sent from the communication device 8) that is a source of the video displayed on the display 1. A result of the detection acquired here may be stored in a storage unit (for example, a cache), which is not illustrated in the drawing, included in the control unit 6.

In Step S2, it is determined whether or not the position of the face has moved. More specifically, the control unit 6 determines whether or not the position of the face of the person appearing in the video displayed on the display 1 has moved from the position detected in Step S1 of the flowchart of the previous time (functioning as a determination unit). For example, in a case in which the magnitude of a deviation between the position of the face at the previous time and the position of the face at the current time on the display surface of the display 1 (on the front face 1a) is equal to or larger than a predetermined value, it may be determined that the position of the face has moved. The predetermined value, for example, may be set as the number of pixels (several pixels to several tens of pixels) of the display 1. In a case in which the position of the face has moved (Step S2: Yes), the control unit 6 causes the process to proceed to the following Step S3. Otherwise (Step S2: No), the control unit 6 skips Step S3.

In Step S3, the camera 2 and the first part 31A of the masking member 3A are moved. More specifically, the control unit 6 controls the stage 4 such that the camera 2 is located at the position of the face detected in the previous Step S1. Together with that, the control unit 6 controls the masking member 3A such that the first part 31A of the masking member 3A is located at the position of the camera 2 (in other words, the position of the face). In this way, the camera 2 and the first part 31A of the masking member 3A are located at the position of the face of the person displayed on the display 1.

After Step S3 is skipped, or after the process of Step S3 is completed, the process of the flowchart ends.

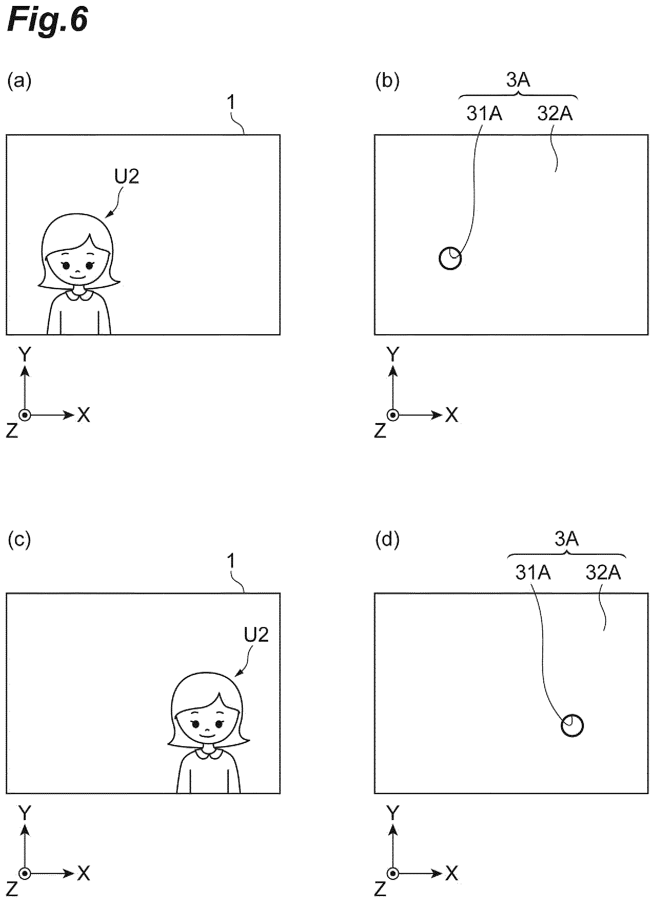

Fig. 6 illustrates an example of effects of the dynamic control. As illustrated in (a) of Fig. 6, it is assumed that a face (for example, eyes) of a user U2 is displayed on one-end (X axis negative direction) side of the display 1. At this time, as illustrated in (b) of Fig. 6, the position of the first part 31A is controlled such that the first part 31A of the masking member 3A is located on the one-end (in the X axis negative direction) side of the masking member 3A following the position of the face, for example, the eyes of the user U2. On the other hand, as illustrated in (c) of Fig. 6, it is assumed that the face of the user U2 is present on the other end (in the X axis positive direction) side of the display 1. At this time, as illustrated in (d) of Fig. 6, the position of the first part 31A is controlled such that the first part 31A of the masking member 3A is positioned at the other end (X axis positive direction) side of the masking member 3A.

In the description presented above, an example in which the position of the first part 31A of the masking member 3A moves in a horizontal direction (the X axis direction) has been described. Also a case in which the position of the first part 31A moves in a vertical direction (the Y axis direction) can be similarly described, and thus description thereof will be omitted here.

Also in the display imaging device 7A described above, similar to the display imaging device 7 (Fig. 1 and the like), the video quality of the display 1 and the camera 2 can be improved more than in a case in which a hologram is used, and the camera 2 can be concealed more than in a case in which a hologram is used. In addition, in the display imaging device 7A, the masking member 3A is a liquid crystal mask capable of controlling the positions of the first part 31A and the second part 32A of the masking member 3A. For this reason, the position of the first part 31A of the masking member 3A can be dynamically controlled in accordance with movement of the camera 2. As a result, the degree of freedom of the position of the camera 2 is improved. For example, in a case in which the camera 2 is controlled to follow the position of a face or the like of a person of a display video of the display 1 (a call partner), even when the call partner moves on the display surface (the front face 1a) of the display 1, a state in which the camera 2 is present on the rear face of the position of the face of the call partner can be constantly maintained, and accordingly, communication in which eye contacts coincide with each other is maintained.

The control unit 6 included in the display imaging device 7A may control the position of the first part 31A of the masking member 3A in accordance with a video displayed on the display 1 (the position of the face or the like of the user U2 illustrated in Fig. 3). In such a case, the control unit 6 may control the position of the first part 31A of the masking member 3A in accordance with movement of the camera 2 using a movement device that moves the camera 2 like the stage 4. In such a case, for example, in the video call system 9 (Fig. 3), the camera 2 is constantly located at the position of the eyes of the user U2, and accordingly, even when the position of the user U2 displayed on the display 1 changes, a state in which the visual lines of the user U1 and the user U2 coincide with each other can be maintained. In addition, the movement device may be a device that moves at least the camera 2 in the X axis direction and the Y axis direction, and is not limited to the stage 4 illustrated in Fig. 4.

While the embodiments of the present invention have been described as above, the present invention is not limited to the embodiments described above. In the embodiments described above, although an example in which the display imaging devices 7 and 7A are used for the video call system 9 has been described, the use of the display imaging devices 7 and 7A is not limited to the video call system 9. For example, the user U1 may use the display imaging devices 7 and 7A for displaying his or her own video. In such a case, the display 1 displays a video imaged by the camera 2. As described above, in the display imaging devices 7 and 7A, the camera 2 is configured not to be visually conspicuous when the display 1 is seen from the front side (the Z axis positive direction), and accordingly, the user U1 can perform imaging while checking how he or she is represented regardless of the position of the camera 2. In a camera (a certificate photograph camera or a sealing printer) and the like, the use of such display imaging devices 7 and 7A has an advantage of being capable of checking an imaging preview screen with an eye line directed toward the front side at the time of imaging. In augmented reality (AR) signage placed in a shopping center or the like, also in a case in which CG is composed with a user's video, the user can enjoy the video more naturally. In addition, in an application such as providing live distribution while a user projects him or her, a more natural expression can be distributed.

Each of the display imaging devices 7 and 7A may include a plurality of cameras 2. In such a case, the masking member 3 of the display imaging device 7 may include a plurality of first parts 31. The masking member 3A of the display imaging device 7A may include a plurality of first parts 31A. Particularly, in the display imaging device 7A using the masking member 3A as a liquid crystal mask, the number of first parts 31A of the masking member 3A may be changed at an appropriate time in accordance with the number of cameras 2.

In addition, the control unit 6 used in the description of the embodiments described above may be realized by an arbitrary combination of hardware and/or software. A means that realizes such functions is not particularly limited. In other words, such a function may be realized by one device that is combined physically and/or logically or may be realized by directly and/or indirectly (for example, in a wired manner and/or a wireless manner) connecting two or more devices that are separated physically and/or logically and using the plurality of devices.

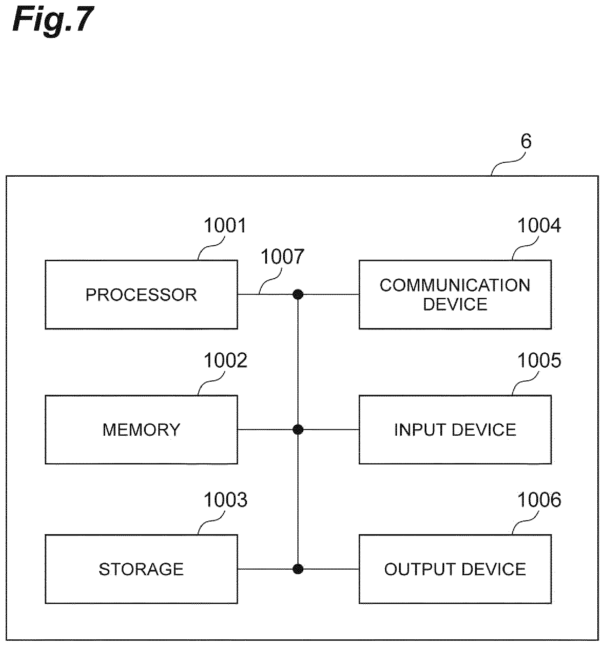

For example, the control unit 6 may function as a computer performing the process of the control unit 6 and the process of the communication device 8 described until now. Fig. 7 is a diagram illustrating one example of the hardware configuration of the control unit 6 according to this embodiment. The control unit 6 described above may be physically configured as a computer device including a processor 1001, a memory 1002, a storage 1003, a communication device 1004, an input device 1005, an output device 1006, a bus 1007, and the like.

In addition, in the following description, the term "device" may also be read as a circuit, a unit, or the like. The hardware configuration of the control unit 6 may be configured to include one or a plurality of devices illustrated or may be configured not to include some of the devices.

Each function of the control unit 6 is realized by the processor 1001 performing an arithmetic operation and controlling communication using the communication device 1004 and data reading and/or writing for the memory 1002 and the storage 1003 by causing the processor 1001 to read predetermined software (a program) onto hardware such as the memory 1002 or the like.

The processor 1001, for example, controls the entire computer by operating an operating system. The processor 1001 may be configured by a central processing unit (CPU) including an interface with peripheral devices, a control device, an arithmetic operation device, a register, and the like.

In addition, the processor 1001 reads a program (program code), a software module, data, and the like from the storage 1003 and/or the communication device 1004 into the memory 1002 and executes various processes in accordance with this. As the program, a program causing the computer to execute at least some of the operations described in the embodiment described above is used. For example, the control unit 6 may be realized by a control program that is stored in the memory 1002 and is operated by the processor 1001, and the other functional blocks may be similarly realized. While various processes described above have been described as being executed by one processor 1001, the processes may be executed by two or more processors 1001 simultaneously or sequentially. The processor 1001 may be realized using one or more chips. In addition, the program may be transmitted from a network through a telecommunication line.

The memory 1002 is a computer-readable recording medium and, for example, may be configured by at least one of a read only memory (ROM), an erasable programmable ROM (EPROM), an electrically erasable programmable ROM (EEPROM), a random access memory (RAM), and the like. The memory 1002 may be referred to as a register, a cache, a main memory (a main storage device), or the like. The memory 1002 can store a program (a program code), a software module, and the like that can be executed to perform the process using the control unit 6.

The storage 1003 is a computer-readable recording medium and, for example, may be configured by at least one of an optical disc such as a compact disc ROM (CD-ROM), a hard disk drive, a flexible disk, a magneto-optical disc (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The storage 1003 may be referred to as an auxiliary storage device. The storage medium described above, for example, may be a database including the memory 1002 and/or storage 1003, a server, or any other appropriate medium.

The communication device 1004 is hardware (a transmission/reception device) for performing inter-computer communication through a wired and/or wireless network and, for example, may also be called a network device, a network controller, a network card, a communication module, or the like.

The input device 1005 is an input device (for example, a keyboard, a mouse, a microphone, a switch, a button, a sensor, or the like) accepting an input from the outside. The output device 1006 is an output device (for example, a display, a speaker, an LED lamp, or the like) performing output to the outside. In addition, the input device 1005 and the output device 1006 may have an integrated configuration (for example, a touch panel).

In addition, devices such as the processor 1001, the memory 1002, and the like are interconnected through a bus 1007 for communication of information. The bus 1007 may be configured as a single bus or may be configured using different buses for different devices.

In addition, the control unit 6 may be configured to include hardware such as a microprocessor, a digital signal processor (DSP), an application specific integrated circuit (ASIC), a programmable logic device (PLD), a field programmable gate array (FPGA), or the like, and a part or the whole of each functional block may be realized by the hardware. For example, the processor 1001 may be realized using at least one of such hardware components.

As above, while the present invention has been described in detail, it is apparent to a person skilled in the art that this embodiment is not limited to the embodiments described in this specification. This embodiment may be modified or changed without departing from the concept and the scope of the present invention set in accordance with the claims. Thus, the description presented in this specification is for the purpose of exemplary description and does not have any limited meaning for this embodiment.

The processing sequence, the sequence, the flowchart, and the like of each aspect/embodiment described in this specification may be changed in order as long as there is no contradiction. For example, in a method described in this specification, elements of various steps are presented in an exemplary order, and the method is not limited to the presented specific order.

The aspects/embodiments described in this specification may be individually used, used in combination, or be switched therebetween in accordance with execution.

It is apparent that software, regardless whether it is called software, firmware, middleware, a microcode, a hardware description language, or any other name, be widely interpreted to mean a command, a command set, a code, a code segment, a program code, a program, a subprogram, a software module, an application, a software application, a software package, a routine, a subroutine, an object, an executable file, an execution thread, an order, a function, and the like.

In addition, software, a command, and the like may be transmitted and received via a transmission medium. For example, in a case in which software is transmitted from a website, a server, or any other remote source using wiring technologies such as a coaxial cable, an optical fiber cable, a twisted pair, a digital subscriber line (DSL) and the like and/or radio technologies such infrared rays, radio waves, and microwaves, and the like, such wiring technologies and/or radio technologies are included in the definition of the transmission medium.

In addition, a term described in this specification and/or a term that is necessary for understanding the present disclosure may be substituted with terms having the same meaning or a meaning similar thereto.

Terms "system" and "network" used in this specification are compatibly used.

Description of "on the basis of" used in this specification does not mean "only on the basis of" unless otherwise mentioned. In other words, description of "on the basis of' means both "only on the basis of" and "at least on the basis of."

In this specification, in a case in which names such as "first," "second," and the like is used, referring to each element does not generally limit the amount or the order of such an element. Such names may be used in this specification as a convenient way for distinguishing two or more elements from each other. Accordingly, referring to the first and second elements does not mean that only the two elements are employed therein or the first element precedes the second element in a certain form.

As long as "include," "including," and modifications thereof are used in this specification or the claims, such terms are intended to be inclusive like a term "comprising." In addition, a term "or" used in this specification or the claims is intended to be not an exclusive logical sum.

In this present specification, other than a case in which clearly only one device is present in a context or technically, a device includes a plurality of devices.

In the entirety of the present disclosure, unless a singular form is represented clearly from the context, plural forms are included.

### Reference Signs List

1 Display
2 Camera
3 Masking member
4 Stage
5 Display imaging unit
6 Control unit
7 Display imaging device
8 Communication device
9 Video call system
21 Light receiving unit
22 Main body
31, 31A First part
32, 32A Second part
41 Support part
42 Horizontal rail
43 Leg part
U1, U2 User

## Claims

1. A display imaging device comprising:
a display that has a viewing angle on a front side and is transparent and a self-emission type;
a camera that images the front side through the display from a rear side of the display; and
a masking member that includes a transparent first part and a non-transparent second part, and is disposed to cover a rear face of the display,
wherein the first part of the masking member overlaps the camera when the display is seen from the front side.

2. The display imaging device according to claim 1, wherein the first part of the masking member is an opening.

3. The display imaging device according to claim 1, wherein the masking member is a liquid crystal mask that can control positions of the first part and the second part in the masking member.

4. The display imaging device according to claim 3, further comprising a control unit that controls the position of the first part of the liquid crystal mask in accordance with a video displayed on the display.

5. The display imaging device according to claim 4, further comprising a movement device that moves the camera in accordance with the video displayed on the display,
wherein the control unit controls the position of the first part of the liquid crystal mask in accordance with movement of the camera.

6. The display imaging device according to any one of claims 1 to 3, further comprising a control unit that controls the display and the camera such that light emission using the display and imaging using the camera are performed at different timings.

7. The display imaging device according to any one of claims 1 to 6,
wherein the camera includes a light receiving unit on which light from an imaging target is incident, and
wherein the first part of the masking member overlaps the light receiving unit of the camera when the display is seen from the front side.

8. The display imaging device according to any one of claims 1 to 7, wherein the display displays a video imaged by the camera.
